# EUROPEAN PATENT APPLICATION

(11) **EP 3 896 325 A1**
(43) Date of publication of application: **20.10.2021**
(21) Application number: 19895266.5
(22) Date of filing: 10.12.2019
(51) Int. Cl.: F16L 59/065

(54) **LAYERED BODY FOR VACUUM THERMAL INSULATION MATERIAL AND VACUUM THERMAL INSULATION MATERIAL USING SAME**

(30) Priority: 11.12.2018 JP 2018231560
(71) Applicant: Toppan Printing Co., Ltd., Tokyo 110-0016 (JP)
(72) Inventor: YAMASHITA, Kaori, Tokyo 110-0016 (JP); GOTO, Kanako, Tokyo 110-0016 (JP)
(74) Representative: TBK
(86) International application number: PCT/JP2019/048282
(87) International publication number: WO 2020/122065

(57) **Abstract**

A laminate for vacuum insulation material that covers a core material includes a barrier film and a heat sealing layer disposed on the barrier film. The barrier film includes a film substrate layer, a vapor-deposited aluminum layer formed on the film substrate layer and having a thickness in the range of 10 nm to 100 nm, and a barrier coating layer formed on the vapor-deposited aluminum layer and containing a water-soluble polymer and a metal alkoxide or a hydrolysate thereof. In an XPS analysis of a surface of the vapor-deposited aluminum layer on the barrier coating layer side, aluminum bonded to oxygen (Al-O) has a peak area that is two times or less the peak area of unoxidized aluminum (Al).

## Description

### [Technical Field]

The present invention relates to laminates for vacuum insulation material, and vacuum insulation materials using the laminates. The present application is based on and claims the benefit of priority from earlier Japanese Patent Application No. 2018-231560 filed December 11, 2018, the description of which is incorporated herein by reference.

### [Background Art]

In recent years, reduction of greenhouse gases is being promoted to prevent global warming, and accordingly, energy saving is required of electrical appliances, vehicles, equipment, buildings, and the like.

From the perspective of reducing power consumption above all, adoption of vacuum insulation materials is underway for various articles which are used for electrical appliances, vehicles, and buildings. If these articles are provided with vacuum insulation materials, the overall insulation performance of these articles can be improved, and the effect of reducing energy can be anticipated.

Vacuum insulation materials are insulation materials in which insulation performance is enhanced by wrapping a core material with a laminate, and creating a vacuum in the area around the core material, thereby allowing the thermal conductivity of gas to be as close to zero as possible.

Vacuum insulation materials, in general, are formed by heat sealing the peripheral edges of two packaging materials facing each other (also termed a pair of packaging materials hereinafter) to provide a pouch, placing a core material, such as a foamed resin or a fibrous material, inside the pouch, expelling air to produce a vacuum inside, and hermetically sealing the opening of the pouch.

Vacuum insulation materials, which have a high vacuum internally, can prevent heat transfer that would otherwise be caused by internal air convection, and thus can exhibit high insulation performance.

To maintain the insulation performance of vacuum insulation materials, the internal vacuum is required to be maintained. Therefore, packaging materials used for vacuum insulation materials are required to have various functions, such as gas barrier properties for preventing permeation of gas from outside and thermal adhesion for achieving hermetical sealing by covering the core material. For this reason, generally used packaging materials are provided with laminates each including a plurality of functional layers having these functions.

For example, PTLs 1 to 3 each disclose a packaging material in which a heat sealing layer, a single- or multi-layer gas barrier layer, and a single- or multi-layer protective layer are laminated in this order from the core material side of the vacuum insulation material. These functional layers configuring the packaging material are usually laminated via interlayer adhesive layers.

### [Citation List]

### [Patent Literature]

PTL 1: JP 2010-255938 A
PTL 2: JP 2011-89740 A
PTL 3: JP 2006-194297 A

### [Summary of the Invention]

### [Solution to Problem]

Vacuum insulation materials may be used for a long period of time in a high temperature environment of around 100°C. If the heat resistance of a packaging material is low, the internal vacuum of the vacuum insulation material may not be maintained due to deterioration of the packaging material. This may consequently raise an issue that a long-term insulation performance cannot be exhibited.

To enhance insulation performance, vapor-deposited aluminum films are often used for such packaging materials mentioned above. In this case, a barrier coating layer may be formed on a vapor-deposited aluminum film to further enhance the barrier properties of the vapor-deposited aluminum film. However, this often causes delamination in the laminate due to insufficient adhesion between the vapor-deposited aluminum film and the barrier coating layer, or due to deterioration in laminate strength over time.

The inventors of the present invention have found the cause of this delamination, the details of which will be described later.

The present invention aims to provide a laminate for vacuum insulation material which achieves sufficient adhesion between a vapor-deposited aluminum film and a barrier coating layer and maintains the adhesion over a long period of time.

The present invention also aims to provide a vacuum insulation material capable of maintaining high insulation performance over a long period of time.

### [Solution to Problem]

A first aspect of the present invention is a laminate for vacuum insulation material that covers a core material.

The laminate for vacuum insulation material includes a barrier film and a heat sealing layer disposed on the barrier film.

The barrier film includes a film substrate layer, a vapor-deposited aluminum layer formed on the film substrate layer and having a thickness in the range of 10 nm to 100 nm, a water-soluble polymer formed on the vapor-deposited aluminum layer, and a barrier coating layer containing a metal alkoxide or a hydrolysate thereof.

In an XPS analysis of a surface of the vapor-deposited aluminum layer on the barrier coating layer side, aluminum bonded to oxygen (Al-O) has a peak area that is two times or less the peak area of unoxidized aluminum (Al).

A second aspect of the present invention is a vacuum insulation material including a laminate for vacuum insulation material according to the present invention and a core material.

In the vacuum insulation material, the laminates for vacuum insulation material are formed into a pouch by bonding the heat sealing layers to each other, and the core material is disposed inside the laminate for vacuum insulation material formed into a pouch and is vacuum-sealed.

### [Advantageous Effects of the Invention]

The laminate for vacuum insulation material of the present invention can achieve sufficient adhesion between a vapor-deposited aluminum film and a barrier coating layer and can maintain the adhesion over a long period of time.

The vacuum insulation material of the present invention can maintain high insulation performance over a long period of time.

### [Brief Description of the Drawings]

Fig. 1 is a schematic cross-sectional view illustrating a vacuum insulation material according to an embodiment of the present invention.
Fig. 2 is a schematic cross-sectional view illustrating a part of a laminate for vacuum insulation material according to an embodiment of the present invention.
Fig. 3 is a schematic cross-sectional view illustrating a part of a barrier film used for the laminate for vacuum insulation material.

### [Description of the Embodiments]

With reference to the drawings, some embodiments of the present invention will be described in detail. It should be noted that the present invention is not limited only to these examples.

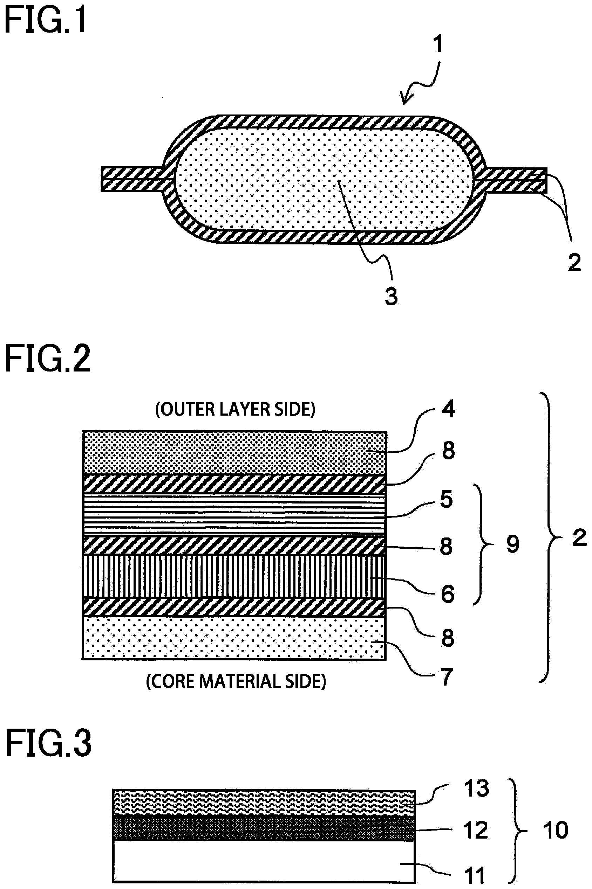

Fig. 1 is a schematic cross-sectional view illustrating a vacuum insulation material according to an embodiment of the present invention.

A core material (3) is covered and encapsulated with a laminate (2) for vacuum insulation material to configure a vacuum insulation material (1) as a whole. Air is expelled from the inside producing a vacuum. Two laminates (2) for vacuum insulation material are overlapped with each other with the heat sealing layers facing each other, and heat-sealed to form a pouch.

Fig. 3 is a schematic cross-sectional view illustrating an embodiment of a barrier film configuring a part of the laminate (2) for vacuum insulation material.

A barrier film (10) forms a gas barrier layer and has a configuration in which a vapor-deposited layer (12) is laminated on a film substrate layer (11), and a barrier coating layer (13) for retaining the barrier properties as protection function is further laminated on the vapor-deposited layer (12).

Fig. 2 is a schematic cross-sectional view illustrating a part of the laminate (2) for vacuum insulation material. In the present embodiment, a polyamide film is used as a substrate (4) of the laminate (2) for vacuum insulation material. The substrate (4) is an outermost layer of the vacuum insulation material (1).

A gas barrier layer (9) is laminated on the substrate (4). In the present embodiment, two films are used for the gas barrier layer (9). One is an aluminum-deposited polyethylene terephthalate barrier coating (termed barrier VM-PET hereinafter) film (5). The other is an aluminum-deposited ethylene-vinyl alcohol copolymer (termed VM-EVOH hereinafter) film (6). The barrier VM-PET film (5) is bonded to the substrate (4) via a dry-laminated layer (8). The VM-EVOH film (6) is bonded to the barrier VM-PET film (5) via a dry-laminated layer (8).

The VM-EVOH film (6) is provided with a heat sealing layer (7). The heat sealing layer (7) is bonded to the VM-EVOH film (6) via a dry-laminated layer (8).

For each dry-laminated layer (8), an adhesive may be appropriately selected from various adhesives used for dry lamination. Instead of dry lamination, solvent-free lamination using a solvent-free adhesive may be used.

The barrier VM-PET film (5) shown in Fig. 2 includes three layers, i.e., a film substrate layer (11), a vapor-deposited layer (12), and a barrier coating layer (13), as in the barrier film (10) shown in Fig. 3. The vapor-deposited layer (12) is a vapor-deposited aluminum layer with a thickness in the range of 10 nm to 100 nm. The VM-EVOH film (6) has a two-layer structure corresponding to a barrier film (10) with the barrier coating layer (13) removed.

The number of layers of the gas barrier layer (9) is not particularly limited, but may include at least one layer exhibiting barrier properties. The layer structure and materials for the gas barrier layer (9) are appropriately determined considering the usage of the vacuum insulation material.

### (Substrate)

Next, the components of the laminate (2) for vacuum insulation material will be described.

The substrate (4) may be a plastic film of a polymer material. The polymer film is a film comprising a polymer resin composition, a material of which is appropriately selected according to usage from polyolefin (polyethylene, polypropylene, etc.), polyester (polyethylene terephthalate, polybutylene terephthalate, polyethylene naphthalate, etc.), polyamide (nylon-6, nylon-66, etc.), polyimide, and the like.

For example, the embodiment shown in Fig. 2 is an example of using a polyamide film, which is more preferred as an outermost layer covering the vacuum insulation material, from the perspective of strength.

The laminate (2) for vacuum insulation material is required to have gas barrier properties to maintain the internal vacuum. Therefore, a gas barrier layer is provided between the layers configuring the laminate to impart gas barrier properties. The gas barrier layer may be a metal foil such as of aluminum, or may be a gas barrier film whose surface is provided with a gas barrier layer.

### (Barrier film)

The barrier film (10) may, for example, include a film substrate layer (11) made of a plastic material with one surface thereof provided with a vapor-deposited layer, or with a vapor-deposited layer (12) and a barrier coating layer (13) sequentially laminated thereon.

Examples of the plastic material may include polyester films such as polyethylene terephthalate (PET) and polyethylene naphthalate (PEN), polyolefin films such as polyethylene and polypropylene, polystyrene films, polyamide films, polycarbonate films, polyacrylonitrile films, polyimide films, ethylene-vinyl alcohol copolymer (EVOH) films, and polyvinyl alcohol (PVA) films.

These materials may be used being stretched or unstretched as long as the materials have mechanical strength or dimensional stability. Usually, these materials are used after being processed into a film. From the perspective of heat resistance in particular, polyethylene terephthalate films, polyamide films, or polypropylene films arbitrarily stretched in biaxial directions are preferred to be used.

The surface of the film facing away from the surface provided with the vapor-deposited layer may contain various well-known additives and stabilizers, e.g., an antistatic agent, ultraviolet inhibitor, plasticizer, and lubricant. To enhance adhesion to the vapor-deposited layer, the laminated surface side of the substrate may undergo any of corona treatment, low temperature plasma treatment, ion bombardment treatment, chemical treatment, solvent treatment, and the like as pretreatment.

The thickness of the film is not particularly limited. Instead of being a single layer film, a film comprising films having different natures may be laminated thereon, considering suitability as a film. From the perspective of processability, the thickness is preferred to be in the range of 3 µm to 200 µm, and more preferably 6 µm to 30 µm.

From the perspective of mass productivity, the film is preferred to be a long continuous film so that the layers can be continuously formed.

### (Vapor-deposited layer)

The vapor-deposited layer (12) may be a vapor-deposited aluminum film, for example, having gas barrier properties against oxygen, water vapor, and the like.

The optimum thickness of the vapor-deposited layer depends on the type and composition of the compound used, but is preferred to be in the range of 10 nm to 100 nm and can be appropriately selected. It should be noted that if the thickness is less than 10 nm, uniform thickness is not necessarily obtained and the thickness may not be sufficient.

The vapor-deposited layer can be formed on a film through a generally used vacuum vapor deposition method. Other film forming methods may be used, including sputtering, ion plating, and plasma enhanced chemical vapor deposition (PCVD). From the perspective of productivity, the vacuum vapor deposition method may currently be the best. The heating method for the vacuum vapor deposition is preferred to be any of electron beam heating, resistance heating, and induction heating.

To improve adhesion between the vapor-deposited layer and the substrate, and to improve density of the vapor-deposited layer, vapor deposition may be performed using a plasma assisted method or an ion beam assisted method.

### (Barrier coating layer)

A description will be given of the barrier coating layer (13) formed through coating, by which the barrier coating layer (13) can be formed being overlapped with the vapor-deposited layer to form a gas barrier layer.

The barrier coating layer is formed using a coating agent that comprises, as a base resin, an aqueous solution or a water/alcohol mixture solution containing a water-soluble polymer, and at least either (a) one or more alkoxides and/or hydrolysates thereof or (b) tin chloride. For example, such a solution may be prepared by dissolving a water-soluble polymer and tin chloride in an aqueous (water or water/alcohol mixture) solvent, or by directly mixing a metal alkoxide into this solution or by mixing a metal alkoxide that has undergone hydrolysis treatment into this solution. A barrier coating layer can be formed by applying this solution to the vapor-deposited layer (12) composed of an inorganic oxide, followed by heating and drying.

The water-soluble polymer used for the coating agent may be polyvinyl alcohol, polyvinylpyrrolidone, starch, methyl cellulose, carboxy methyl cellulose, sodium alginate, or the like. In particular, use of polyvinyl alcohol (PVA) can achieve the best gas barrier properties. This PVAis not particularly limited but can be obtained in general by saponification of polyvinyl acetate, and includes so-called partially saponified PVAs in which several tens of percent of the acetic acid group remains and completely saponified PVAs in which only a few percent of the acetic acid group remains.

The tin chloride used for the coating agent may be tin dichloride (SnCh), tin tetrachloride (SnCl₄), or a mixture of them. These tin chlorides may be anhydrates, or may be hydrates.

The metal alkoxide used for the coating agent is a compound that can be expressed by a general formula M(OR)n (where M is a metal such as Si, Ti, Al or Zr, and R is an alkyl group such as CH₃ or C₂H₅). The metal alkoxide may specifically be tetraethoxysilane [Si(OC₂H₅)₄], triisopropoxyaluminum [Al(O-2'-C₃H₇)₃], or the like. Among them, tetraethoxysilane and triisopropoxyaluminum are preferred because they are comparatively stable in aqueous solvent after being hydrolyzed.

The coating agent may contain, as necessary, known additives such as an isocyanate compound, silane coupling agent, dispersant, stabilizer, viscosity modifier, and coloring agent as long as the gas barrier properties of the coating agent are not impaired.

For example, the isocyanate compound added to the coating agent is preferred to have two or more isocyanate groups per molecule. Examples of the isocyanate compound may include monomers such as tolylene diisocyanate, triphenylmethane triisocyanate, and tetramethylxylene diisocyanate, and copolymers or derivatives of these materials.

The method of applying the coating agent may be a known method, such as generally used dipping, roll coating, screen printing, spray coating, or gravure printing. The thickness of the coating depends on the type of the coating agent, the processing device, or the processing conditions. If the dry thickness is 0.01 µm or less, a uniform coated film is not necessarily obtained, and thus sufficient gas barrier properties are not necessarily achieved, which is not preferred. If the thickness exceeds 50 µm, easy occurrence of cracking in the film may arise as an issue. Therefore, the thickness is preferred to be in the range of 0.01 µm to 50 µm, and more preferably 0.1 µm to 10 µm.

It should be noted that another vapor-deposited layer and another barrier coating layer may further be provided on the above vapor-deposited layer and barrier coating layer. Thus, as necessary, a plurality of layers may be laminated.

The method of laminating the layers configuring the gas barrier layer (9) of the laminate for vacuum insulation material is not particularly specified, but may, for example, be a dry lamination method using a two-part curing urethane adhesive, a solvent-free lamination method using a solvent-free adhesive, an extrusion lamination method, or the like.

### (Heat sealing layer)

The material for the heat sealing layer (7) may be a material containing a polyolefin resin. The heat sealing layer (7) is usually a layer that serves as an outermost layer on one side in the lamination direction of the laminate for vacuum insulation material of the present invention.

The heat sealing layer (7) may specifically be a linear polyethylene resin, medium density polyethylene resin, high density polyethylene resin, or polypropylene resin. In the vacuum insulation material using the laminate for vacuum insulation material of the present invention, these resins can ensure firm adhesion at the end portions of the vacuum insulation material.

The heat sealing layer may have any thickness as long as desired adhesion can be achieved. For example, the thickness may be in the range of 20 µm to 100 µm, preferably 25 µm to 90 µm, and even more preferably 30 µm to 80 µm. If the thickness of the heat sealing layer is greater than the above range, the gas barrier properties and the appearance of the entire laminate for vacuum insulation material may be deteriorated. If the thickness is smaller than the above range, desired adhesion is not necessarily achieved and separation may occur while being used for a long time at high temperature.

The heat sealing layer may be a commercially available film or sheet, or may be formed by applying a heat sealing layer-forming composition onto a layer surface with which the heat sealing layer as formed would contact.

In the vacuum insulation material of the present embodiment, the laminate for vacuum insulation material is arranged so that the heat sealing layer comes into contact with the core material.

The laminates for vacuum insulation material are arranged so as to face each other covering the core material and are heat-sealed to the core material to thereby exhibit excellent heat resistance. Accordingly, even when the vacuum insulation material is exposed to a high temperature environment for a long period of time, separation or deterioration can be minimized in the end portions of the vacuum insulation material or between layers of the laminate for vacuum insulation material, and thus high vacuum can be maintained on the inside of the vacuum insulation material over a long period of time.

### (vacuum insulation material)

In the vacuum insulation material of the present embodiment, the core material (3) is disposed, as shown in Fig. 1, between two laminates for vacuum insulation material facing each other and is hermetically sealed by sealing the peripheral edge portions of the laminates for vacuum insulation material. As the material for the core material (3), a generally used material that is used as a core material for a vacuum insulation material can be used. For example, the core material may be a porous material, such as a silica powder or the like, urethane polymer foam or the like, glass wool fibers or the like, or other materials. These porous materials are preferred to have a porosity of 50% or more, and more preferably 90% or more. As the porosity increases, thermal conductivity of the core material decreases.

The core material (3) may contain a getter material to absorb traces of gas permeating from outside. For example, silica, alumina, zeolite, activated carbon, or the like can be used as a getter agent.

The thickness of the core material (3) is not particularly limited as long as a desired insulation effect can be exerted with the thickness, but is preferred to be in the range of 1 mm to 30 mm, for example, after being depressurized.

The vacuum insulation material is preferred to have an internal vacuum of 5 Pa or less. This is because the internal vacuum at this level may block internal air convection of the vacuum insulation material, and the insulation performance can be improved accordingly.

The vacuum insulation material of the present embodiment may have a thermal conductivity (initial thermal conductivity) of 10 mW·m⁻¹·K⁻¹ or less, preferably 5 mW·m⁻¹·K⁻¹ or less, and even more preferably 3 mW·m⁻¹·K⁻¹ or less in a 25°C environment, for example. The insulation effect is improved when heat is unlikely to be transferred to the outside by the vacuum insulation material. The above thermal conductivity is a value measured through a heat flow meter method using a thermal conductivity measuring device (HC-074 manufactured by Eko Instruments Co., Ltd.) according to JIS A 1412-3.

The method of producing the vacuum insulation material of the present embodiment is not particularly limited but a known method can be used as long as the method is a method in which a core material is encapsulated using two laminates for vacuum insulation material facing each other at least one of which uses the laminate with the structure described above, and the core material can be hermetically sealed by expelling air to produce a vacuum.

The vacuum insulation material of the present embodiment can be used as a vacuum insulation material for electric appliances, buildings, cold/warm boxes, vehicles, and the like, i.e., can be used in any site requiring heat insulation.

The inventors of the present invention developed a laminate for vacuum insulation material that uses a barrier film as a gas barrier layer (9) in which a barrier coating layer was formed on a vapor-deposited aluminum layer. During development, the inventors noticed that there were laminates easily suffering separation (delamination) at the interface between the vapor-deposited layer and the barrier coating layer and there were also laminates unlikely to suffer this separation, although the films used had completely the same layer structure.

As a result of an investigation, it was found that those laminates which used barrier films obtained by promptly forming a barrier coating layer following formation of a vapor-deposited aluminum layer were unlikely to suffer delamination when produced. However, those laminates which used barrier films obtained by forming a barrier coating layer after the lapse of some time after formation of the vapor-deposited aluminum film tended to suffer delamination. The inventors further made an investigation and found that oxidation of the aluminum on the surface of the vapor-deposited aluminum layer related to the increase of delamination.

Based on the new findings set forth above, the laminate (2) for vacuum insulation material of the present embodiment is obtained by forming a barrier coating layer on a vapor-deposited aluminum layer at an earlier occasion after formation of the vapor-deposited aluminum layer. Thus, the vapor-deposited aluminum layer can be covered with the barrier coating layer before oxidation progresses in the aluminum on the surface of the vapor-deposited aluminum layer. As a result of this, the peak area where the aluminum has bonded to oxygen (Al-O) is two times or less the peak area where the aluminum (Al) has not been oxidized, as obtained through an XPS analysis, on the surface of the vapor-deposited aluminum layer contacting the barrier coating layer.

With the structure as described above, the laminate for vacuum insulation material of the present embodiment can achieve good adhesion between the vapor-deposited aluminum layer and the barrier coating layer immediately after being produced, and can maintain good adhesion for a long time even when the vacuum insulation material is used in a high temperature environment.

The peak areas of Al-O and Al are specified based on a graph resulting from X-ray photoelectron spectroscopic analysis, and can be easily calculated and acquired using a generally used XPS analyzer (e.g., Quantum 2000 manufactured by Ulvac-Phi, Incorporated).

As a result of an investigation, the inventors have confirmed that the peak area of Al-O can be reduced to two times or less the peak area of A1 if the vapor-deposited aluminum layer is covered with a barrier coating layer within 60 hours after formation of the vapor-deposited aluminum layer. This is a requirement in an atmosphere containing oxygen. If the films after formation of the vapor-deposited aluminum films are stored in an oxygen-free environment, such as under vacuum or under inert gas, the peak area of Al-O can be reduced to two times or less the peak area of A1 even when the barrier coating layers are formed after the lapse of 60 hours after formation of the vapor-deposited aluminum layers.

As a result of an investigation, the inventors also found that, in addition to the oxidation degree on the surface of the vapor-deposited aluminum film, carbon existing on the surface of the vapor-deposited aluminum layer also related to delamination. If the percentage of carbon on the surface of the vapor-deposited aluminum layer is 5% or less in an XPS analysis result, good adhesion can be achieved between the vapor-deposited aluminum layer and the barrier coating layer.

This carbon is considered to be derived from hydrocarbon, such as methane, present in the air. Specifically, it is considered that hydrocarbon adheres to the surface of the vapor-deposited aluminum layer and thereby impairs adhesion between the barrier coating layer and the vapor-deposited aluminum layer.

The laminate for vacuum insulation material of the present embodiment may include two or more sets of vapor-deposited aluminum layer and arrier coating layer. Thus, barrier properties can be further enhanced. In this case, the number of interfaces between the vapor-deposited aluminum layer and the barrier coating layer is equal to the number of sets. Therefore, delamination can be suitably minimized by satisfying the above requirement at all of the interfaces.

### [Examples]

The laminate for vacuum insulation material and the vacuum insulation material of the present embodiment will be further described using examples and comparative examples. The present invention should not be construed as being limited to the specific contents of the examples and the comparative examples.

### <Example 1>

As a substrate (4), a polyamide (NY) film with a thickness of 25 µm (product name: BONYL-RX manufactured by KOHJIN Film & Chemicals Co.,Ltd.) was used.

A VM-PET film (5) with a thickness of 12 µm was laminated on the substrate (4) via a dry-laminated layer (8). A urethane-based adhesive was used as the dry-laminated layer (8). The VM-PET film (5) included a vapor-deposited aluminum layer with a thickness of 70 nm, with a barrier coating layer formed on the vapor-deposited aluminum layer using a coating agent that contained tetraethoxysilane (TEOS) and polyvinyl alcohol (PVA) as main components.

A VM-EVOH film (6) with a thickness of 12 µm (product name VM-XL manufactured by Kurarey Co., Ltd.) was laminated on the VM-PET film (5) via a dry-laminated layer (8). The VM-EVOH film (6) included a vapor-deposited aluminum layer with a thickness of 40 nm.

As a heat sealing layer (7), a linear polyethylene film with a thickness of 50 µm (product name FCS manufactured by Mitsui Chemicals Tohcello, Inc.) was laminated on the VM-EVOH film (6) via a dry-laminated layer (8), thereby obtaining a packaging material for vacuum insulation material related to Example 1.

The dry-laminated layers (8) were all a urethane-based adhesive.

Two packaging materials for vacuum insulation material of Example 1 were overlapped with each other so that the heat sealing layers (7) faced each other, and three sides thereof were heat-sealed and bonded to form a pouch. Glass fibers as a core material (3) were encapsulated in the pouch and the unbonded side was heat-sealed, while the internal pressure of the pouch was retained at 1.0 Pa using a vacuum packaging device

Through the procedure described above, a vacuum insulation material of Example 1 was obtained.

### <Example 2>

A packaging material for vacuum insulation material and a vacuum insulation material of Example 2 were obtained as in Example 1 except that a VM-PET film (5) was used instead of the VM-EVOH film (6) to provide two sets of vapor-deposited aluminum layer and barrier coating layer.

### <Example 3>

A packaging material for vacuum insulation material and a vacuum insulation material of Example 3 were obtained as in Example 2 except that still another VM-PET film (5) was laminated to provide three sets of vapor-deposited aluminum layer and barrier coating layer.

### <Example 4>

A packaging material for vacuum insulation material and a vacuum insulation material of Example 4 were obtained as in Example 1 except that an aluminum-deposited biaxially stretched polypropylene (OPP) film (VM-OPP) was used instead of the VM-PET film (5), and a VM-PET film (5) was used instead of the VM-EVOH film (6). The VM-OPP was obtained by coextruding polypropylene and EVOH, stretching the coextruded materials to form a substrate film, and vapor-depositing aluminum on the EVOH surface of the coextruded substrate film. In the substrate film, the EVOH and the polypropylene had respective thicknesses of 2.0 µm and 13.0 µm, and the vapor-deposited aluminum layer had a thickness of 40 nm.

### <Example 5>

A substrate (4) similar to one used in Example 1 was laminated on a barrier coating layer of a VM-PET film (5) via a dry-laminated layer (8), and another VM-PET film (5) was further laminated on the substrate (4) via a dry-laminated layer (8).

Furthermore, a heat sealing layer (7) similar to one used in Example 1 was laminated on the VM-PET film (5) via a dry-laminated layer (8), thereby obtaining a packaging material for vacuum insulation material of Example 5. The packaging material for vacuum insulation material of Example 5 included two sets of vapor-deposited aluminum layer and barrier coating layer.

Through a procedure similar to Example 1, a vacuum insulation material of Example 5 was obtained.

### <Example 6>

A packaging material for vacuum insulation material and a vacuum insulation material of Example 6 were obtained as in Example 1 except that a VM-PET film (5-2) was used instead of the VM-PET film (5).

In the VM-PET film (5-2), a second vapor-deposited aluminum layer (70 nm thickness) was formed on the barrier coating layer, and a second barrier coating layer was further formed on the second vapor-deposited aluminum layer. The composition of the second barrier coating layer was the same as that of the barrier coating layer.

The packaging material for vacuum insulation material of Example 6 included two sets of vapor-deposited aluminum layer and barrier coating layer.

### <Example 7>

A packaging material for vacuum insulation material and a vacuum insulation material of Example 7 were obtained as in Example 6 except that a substrate (4) was disposed between the VM-PET film (5-2) and the VM-EVOH film (6).

The packaging material for vacuum insulation material of Example 7 included two sets of vapor-deposited aluminum layer and barrier coating layer.

### <Example 8>

A packaging material for vacuum insulation material and a vacuum insulation material of Example 8 were obtained as in Example 6 except that a VM-PET film (5) was used instead of the VM-EVOH film (6).

The packaging material for vacuum insulation material of Example 8 included three sets o vapor-deposited aluminum layer and barrier coating layer.

### <Example 9>

A packaging material for vacuum insulation material and a vacuum insulation material of Example 9 were obtained as in Example 7 except that a VM-PET film (5) was used instead of the VM-EVOH film (6).

The packaging material for vacuum insulation material of Example 9 included three sets of vapor-deposited aluminum layer and barrier coating layer.

### <Example 10>

A packaging material for vacuum insulation material and a vacuum insulation material of Example 9 were obtained as in Example 5 except that a substrate (4-2) was used instead of the substrate (4). The substrate (4-2) was a coextruded multilayer film having a three-layer structure of polyamide, EVOH, and polyamide with a total thickness or 17 µm.

### <Example 11>

A packaging material for vacuum insulation material and a vacuum insulation material of Example 9 were obtained as in Example 2 except that a substrate (4-2) was used instead of the substrate (4).

### <Comparative Example 1>

A packaging material for vacuum insulation material and a vacuum insulation material of Comparative Example 1 were obtained as in Example 1 except that a VM-PET film (5-Oxy) was used instead of the VM-PET film (5).

The VM-PET film (5-Oxy) is different from the VM-PET film (5) and the VM-PET film (5-2) in the time elapsed before formation of a barrier coating layer after formation of a vapor-deposited aluminum layer. For the VM-PET film (5) and the VM-PET film (5-2), a barrier coating layer was formed within 24 hours after formation of a vapor-deposited aluminum layer, but for the VM-PET film (5-Oxy), a barrier coating layer was formed after the lapse of 96 hours or more after formation of a vapor-deposited aluminum layer.

### <Comparative Example 2>

A packaging material for vacuum insulation material and a vacuum insulation material of Comparative Example 2 were obtained as in Example 2 except that a VM-PET film (5-Oxy) was used instead of the VM-PET film (5) closest to the substrate 4.

### <Comparative Example 3>

A packaging material for vacuum insulation material and a vacuum insulation material of Comparative Example 3 were obtained as in Example 3 except that a VM-PET film (5-Oxy) was used instead of the VM-PET film (5) closest to the substrate 4.

### <Comparative Example 4>

A packaging material for vacuum insulation material and a vacuum insulation material of Comparative Example 4 were obtained as in Example 4 except that a VM-PET film (5-Oxy) was used instead of the VM-PET film (5).

### <Comparative Example 5>

A packaging material for vacuum insulation material and a vacuum insulation material of Comparative Example 5 were obtained as in Example 5 except that the VM-PET films (5) were both replaced by respective VM-PET films (5-Oxy).

### <Comparative Example 6>

A packaging material for vacuum insulation material and a vacuum insulation material of Comparative Example 6 were obtained as in Example 6 except that a VM-PET film (5-2Oxy) was used instead of the VM-PET film (5-2).

The VM-PET film (5-2Oxy) has the same structure as the VM-PET film (5-2) except that the barrier coating layers were both formed after the lapse of 96 hours or more after formation of a vapor-deposited aluminum layer.

### <Comparative Example 7>

A packaging material for vacuum insulation material and a vacuum insulation material of Comparative Example 7 were obtained as in Example 7 except that a VM-PET film (5-2Oxy) was used instead of the VM-PET film (5-2).

### <Comparative Example 8>

A packaging material for vacuum insulation material and a vacuum insulation material of Comparative Example 8 were obtained as in Example 8 except that a VM-PET film (5-2Oxy) was used instead of the VM-PET film (5-2).

### <Comparative Example 9>

A packaging material for vacuum insulation material and a vacuum insulation material of Comparative Example 9 were obtained as in Example 9 except that a VM-PET film (5-2Oxy) was used instead of the VM-PET film (5-2).

### <Comparative Example 10>

A packaging material for vacuum insulation material and a vacuum insulation material of Comparative Example 10 were obtained as in Example 10 except that the VM-PET films (5-2) were both replaced by respective VM-PET films (5-2Oxy).

### <Comparative Example 11>

A packaging material for vacuum insulation material and a vacuum insulation material of Comparative Example 11 were obtained as in Example 11 except that the VM-PET films (5-2) were both replaced by respective VM-PET films (5-2Oxy).

The packaging materials for vacuum insulation material and the vacuum insulation materials were evaluated as follows.

### (Analysis for vapor-deposited aluminum layer surface)

An Al-O peak area, Al peak area, and percentage of carbon were acquired for the surface of the vapor-deposited aluminum layer contacting the barrier coating layer in each of the packaging materials, using an X-ray photoelectron spectrometer (XPS) (Quantum 2000 manufactured by Ulvac-Phi, Incorporated).

This analysis was made for all the corresponding surfaces in the examples and the comparative examples including a plurality of sets of vapor-deposited aluminum layer and barrier coating layer. However, the film substrate layer side surfaces of the vapor-deposited aluminum layers of the VM-PET films (5-2) and the VM-PET films (5-2Oxy) further from the respective film substrate layers were not analyzed, although these surfaces were in contact with the respective barrier coating layers. This is because these surfaces were brought into contact with the respective barrier coating layers at the instant that aluminum was vapor-deposited and there would arise no issue of oxidation.

### (Measurements of lamination strength)

Measurements were made using TENSILON universal material testing machine RTF series (manufactured by A&D Company, Limited) according to JIS K 6854.

Several samples were prepared for measurements of lamination strength at the interfaces of the substrate, barrier film, and the heat sealing layer.

### (Measurements of thermal conductivity)

The vacuum insulation materials of the examples and the comparative examples were stored at 90°C for 8 weeks. Measurements were made on three occasions, i.e. before storage, after 4 weeks, and after 8 weeks using a thermal conductivity measuring device (HC-074 manufactured by Eko Instruments Co., Ltd.) according to JIS A 1412-3.

Table 1 shows the results for the examples and Table 2 shows the results for the comparative examples. Table 1 shows lamination strengths at the interfaces measured. Since the number of layers is different depending on the examples and the comparative examples, the values for the interfaces with the heat sealing layers are all shown in the column of the heat sealing layer.

For the VM-PET films (5-2) and the VM-PET films (5-2Oxy), values at the surfaces of the vapor-deposited aluminum layers are shown.

**[Table 1]**

| * | 1^{st} | 2^{nd} | 3^{rd} | 4^{th} | A-O bond/metal (Al) area ratio | | | | Percentage of carbon (%) | | | | Lamination strength [N/15 mm] | | | | Thermal conductivity (W/M·K) | | |
|---|---|---|---|---|---|---|---|---|---|---|---|---|---|---|---|---|---|---|---|
| | | | | | 1^{st} | 2^{nd} | 3^{rd} | 4^{th} | 1^{st} | 2^{nd} | 3^{rd} | 4^{th} | 1^{st}/2^{nd} | 2^{nd}/3^{rd} | 3^{rd}/4^{th} | Heat sealing layer interface | Before storage | 4 wk. | 8 wk. |
| Ex. 1 | Substrate 4 | VM-PET (5) | VM-EVOH (6) | - | | 1.77 | | | | 4.4 | | | 3.8 | 3.0 | - | 6.6 | 0.008 | 0.015 | 0.015 |
| Ex. 2 | Substrate 4 | VM-PET (5) | VM-PET (5) | - | | 1.76 | 1.76 | | | 4.5 | 4.3 | | 3.8 | 3.0 | - | 5.2 | 0.008 | 0.013 | 0.014 |
| Ex. 3 | Substrate 4 | VM-PET (5) | VM-PET (5) | VM-PET (5) | | 1.92 | 1.87 | 1.88 | | 4.3 | 4.5 | 4.4 | 3.6 | 3.0 | 3.9 | 5.6 | 0.008 | 0.015 | 0.015 |
| Ex. 4 | Substrate 4 | VM-OPP | VM-PET (5) | - | | | 1.98 | | | | 4.7 | | 3.4 | 3.0 | - | 6.1 | 0.008 | 0.013 | 0.015 |
| Ex. 5 | VM-PET (5) | Substrate 4 | VM-PET (5) | - | 1.73 | | 1.73 | | 4.4 | | 4.4 | | 3.5 | 2.8 | - | 6.2 | 0.008 | 0.014 | 0.014 |
| Ex. 6 | Substrate 4 | VM-PET (5-2) | VM-EVOH (6) | - | | 1.77 1.78 | | | | 4.5 4.4 | | | 3.1 | 3.0 | - | 6.8 | 0.008 | 0.010 | 0.010 |
| Ex. 7 | VM-PET (5-2) | Substrate 4 | VM-EVOH (6) | - | 1.76 1.78 | | | | 4.6 4.5 | | | | 2.9 | 2.9 | - | 5.8 | 0.008 | 0.010 | 0.010 |
| Ex. 8 | Substrate 4 | VM-PET (5-2) | VM-PET (5) | - | | 1.92 1.76 | 1.76 | | | 4.4 4.5 | 4.3 | | 3.1 | 3.1 | - | 5.6 | 0.008 | 0.011 | 0.011 |
| Ex. 9 | VM-PET (5-2) | Substrate 4 | VM-PET (5) | - | 1.98 1.76 | | 1.87 | | 4.5 4.5 | | 4.4 | | 2.9 | 3.0 | - | 5.8 | 0.008 | 0.011 | 0.011 |
| Ex. 10 | VM-PET (5) | Substrate 4-2 | VM-PET (5) | - | 1.75 | | 1.78 | | 4.3 | | 4.4 | | 2.8 | 3.0 | - | 6.5 | 0.008 | 0.010 | 0.010 |
| Ex. 11 | Substrate 4-2 | VM-PET (5) | VM-PET (5) | - | | 1.77 | 1.97 | | | 4.2 | 4.4 | | 2.9 | 2.9 | - | 6.3 | 0.008 | 0.010 | 0.010 |

| | | | | | | | | | | | | | | | | | | | |
|---|---|---|---|---|---|---|---|---|---|---|---|---|---|---|---|---|---|---|---|
| (*Note that the term "layer" is omitted after the ordinal numbers.) | | | | | | | | | | | | | | | | | | | |

**[Table 2]**

| * | 1^{st} | 2^{nd} | 3^{rd} | 4th | A-O bond/metal (Al) area ratio | | | | Percentage of carbon (%) | | | | Lamination strength [N/15 mm] | | | | Thermal conductivity (W/M·K) | | |
|---|---|---|---|---|---|---|---|---|---|---|---|---|---|---|---|---|---|---|---|
| | | | | | 1^{st} | 2^{nd} | 3^{rd} | 4th | 1^{st} | 2^{nd} | 3^{rd} | 4^{th} | 1^{st}/2^{nd} | 2^{nd}/3^{rd} | 3^{rd}/4^{th} | Heat sealing layer interface | Before storage | 4 wk. | 8 wk. |
| Com. Ex. 1 | Substrate 4 | VM-PET (5-Oxy) | VM-EVOH (6) | - | | 2.87 | | | | 10.6 | | | 3.5 | 0.1 | - | 6.5 | 0.008 | 0.020 | 0.033 |
| Com. Ex. 2 | Substrate 4 | VM-PET (5-Oxy) | VM-PET (5) | - | | 3.08 | 1.76 | | | 10.2 | 4.3 | | 3.2 | 0.1 | - | 5.2 | 0.008 | 0.019 | 0.033 |
| Comp. Ex. 3 | Substrate 4 | VM-PET (5-Oxy) | VM-PET (5) | VM-PET (5) | | 2.54 | 1.87 | 1.88 | | 11.3 | 4.5 | 4.4 | 3.5 | 0.2 | 3.9 | 5.5 | 0.008 | 0.020 | 0.03 |
| Comp. Ex. 4 | Substrate 4 | VM-OPP | VM-PET (5-Oxy) | - | | | 2.47 | | | | 10.5 | | 3.5 | 0.2 | - | 5.9 | 0.008 | 0.018 | 0.033 |
| Comp. Ex. 5 | VM-PET (5-Oxy) | Substrate 4 | VM-PET (5-Oxy) | - | 2.56 | | 2.58 | | 10.7 | | 10.6 | | 0.2 | 0.2 | - | 6.1 | 0.008 | 0.017 | 0.031 |
| Comp. Ex. 6 | Substrate 4 | VM-PET (5-2Oxy) | VM-EVOH (6) | - | | 2.45 2.88 | | | | 10.8 10.6 | | | 2.5 | 0.1 | - | 6.7 | 0.008 | 0.018 | 0.031 |
| Comp. Ex. 7 | VM-PET (5-2Oxy) | Substrate 4 | VM-EVOH (6) | - | 2.67 2.87 | | | | 10.3 10.6 | | | | 0.1 | 2.8 | - | 6.2 | 0.008 | 0.019 | 0.032 |
| Comp. Ex. 8 | Substrate 4 | VM-PET (5-2Oxy) | VM-PET (5) | - | | 3.20 2.88 | 1.76 | | | 11.2 10.6 | 4.3 | \ | 3 | 0.1 | - | 5.8 | 0.008 | 0.019 | 0.033 |
| Comp. Ex. 9 | VM-PET (5-2Oxy) | Substrate 4 | VM-PET (5) | - | 2.90 2.88 | | 1.87 | | 10.9 10.6 | | 4.4 | | 0.1 | 3 | - | 5.9 | 0.008 | 0.021 | 0.032 |
| Comp. Ex. 10 | VM-PET (5-Oxy) | Substrate 4-2 | VM-PET (5-Oxy) | - | 2.66 | | 2.78 | | 11.5 | | 10.2 | | 0.1 | 0.1 | - | 6.4 | 0.008 | 0.020 | 0.031 |
| Comp. Ex. 11 | Substrate 4-2 | VM-PET (5-Oxy) | VM-PET (5-Oxy) | - | | 3.12 | 3.07 | | | 10.2 | 10.8 | | 3.0 | 0.1 | - | 6.2 | 0.008 | 0.019 | 0.031 |

| | | | | | | | | | | | | | | | | | | | |
|---|---|---|---|---|---|---|---|---|---|---|---|---|---|---|---|---|---|---|---|
| (*Note that the term "layer" is omitted after the ordinal numbers.) | | | | | | | | | | | | | | | | | | | |

As shown in Table 1, the peak area ratios between Al-O and A1 on the surfaces of the vapor-deposited aluminum layers contacting the respective barrier coating layers were all 2 or less in the examples. However, the VM-PET films (5-2Oxy) and the VM-PET films (5-Oxy) used in the comparative examples all showed peak area ratios exceeding 2. The percentage of carbon was 5% or less in all of the examples, whereas it exceeded 10% in the VM-PET films (5-2Oxy) and the VM-PET films (5-Oxy) used in the comparative examples.

The lamination strength of the vacuum insulation material was as high as around 3.0N/15 mm in the examples, whereas it was 0.2 or less at the vapor-deposited aluminum layer side interfaces of the VM-PET films (5-2Oxy) and the VM-PET films (5-Oxy) in the comparative examples, and delamination was likely to occur.

In this examination, the barrier films contacting the respective heat sealing layers all showed high lamination strength therebetween in the examples and the comparative examples because the film substrate layers were all disposed facing the respective heat sealing layers. However, depending on the core materials or the devices or the like adopting the vacuum insulation material, the barrier coating layer may often be laminated so as to face the heat sealing layer when forming the packaging material for vacuum insulation material. In this case, there is a risk of delamination occurring between the gas barrier layer and the heat sealing layer unless sufficient adhesion is achieved between the barrier coating layer and the vapor-deposited aluminum layer. However, use of the packaging material for vacuum insulation material of the present invention can suitably prevent the occurrence of delamination.

Specifically, in the packaging material for vacuum insulation material of the present invention, either side of the barrier film may face the heat sealing layer.

For the thermal conductivity when stored at 90°C, the values before storage were suitably maintained until after 8 weeks in the examples. In the comparative examples, the values of thermal conductivity before storage were about the same as in the examples; however, they were greatly reduced over time.

As in the VM-PET film (5-2), the structure including a plurality of sets of vapor-deposited aluminum layer and barrier coating layer is often adopted for the purpose of enhancing gas barrier performance. However, according to the findings of the present invention, this structure may pose a dilemma. That is, the risk of causing delamination may increase as the number of sets of vapor-deposited aluminum layer and barrier coating layer increases, unless the surface of the vapor-deposited aluminum layer is maintained to a predetermined state. The packaging material for vacuum insulation material of the present invention poses no dilemma of this sort, but can enhance barrier performance while minimizing delamination.

An embodiment of the present invention and examples have so far been described. However, specific configurations are not limited to this embodiment. The present invention should encompass modifications, combinations, or the like in the range not departing from the spirit of the present invention.

For example, the packaging material for vacuum insulation material of the present invention does not necessarily have to include a substrate. The substrate may be omitted as long as physical characteristics sufficient for the packaging material for vacuum insulation material can be achieved using, for example, a plurality of barrier films or a multilayer barrier film as the gas barrier layer.

### [Industrial Applicability]

The present invention can be used for packaging materials for vacuum insulation material and for vacuum insulation materials.

Usage of the barrier film of the present invention is not limited to the gas barrier layers of packaging materials for vacuum insulation materials. The barrier film may be used singly for various applications.

### [Reference Signs List]

- 1: vacuum insulation material
- 2: Laminate for vacuum insulation material
- 3: Core material
- 4: Substrate
- 7: Heat sealing layer
- 9: Gas barrier layer
- 10: Barrier film
- 11: Film substrate layer
- 12: Vapor-deposited layer
- 13: Barrier coating layer

## Claims

1. A laminate for vacuum insulation material, the laminate covering a core material and comprising:
a barrier film; and
a heat sealing layer disposed on the barrier film, wherein
the barrier film includes
a film substrate layer,
a vapor-deposited aluminum layer formed on the film substrate layer and having a thickness in a range of 10 nm to 100 nm, and
a barrier coating layer formed on the vapor-deposited aluminum layer and containing a water-soluble polymer, and a metal alkoxide or a hydrolysate thereof; and
in an XPS analysis of a surface of the vapor-deposited aluminum layer on the barrier coating layer side, aluminum bonded to oxygen (Al-O) has a peak area that is two times or less of a peak area of unoxidized aluminum (Al).

2. A laminate for vacuum insulation material, the laminate covering a core material and comprising:
a barrier film; and
a heat sealing layer disposed on the barrier film, wherein
the barrier film includes
a film substrate layer,
a vapor-deposited aluminum layer formed on the film substrate layer and having a thickness in a range of 10 nm to 100 nm, and
a barrier coating layer formed on the vapor-deposited aluminum layer and containing a water-soluble polymer, and a metal alkoxide or a hydrolysate thereof; and
in an XPS analysis of a surface of the vapor-deposited aluminum layer on the barrier coating layer side, a percentage of carbon is 5% or less.

3. The laminate for vacuum insulation material according to claim 1 or 2, wherein the laminate includes two or more sets of the vapor-deposited aluminum layer and the barrier coating layer.

4. A vacuum insulation material comprising:
the laminate for vacuum insulation material according to any one of claims 1 to 3; and
the core material, wherein
the laminates for vacuum insulation material are formed into a pouch by bonding the heat sealing layers to each other; and
the core material is disposed inside the laminate for vacuum insulation material formed into a pouch and is vacuum-sealed.
